Europäisches Patentamt

European Patent Office

Office européen des brevets

(11) Publication number: 0 338 675
A1

## (12) EUROPEAN PATENT APPLICATION

(21) Application number: 89302587.4

(22) Date of filing: 16.03.89

(51) Int. Cl.⁴: G09G 3/36 , G02F 1/137 , H04N 3/12

(30) Priority: 28.03.88 GB 8807321

(43) Date of publication of application:
25.10.89 Bulletin 89/43

(84) Designated Contracting States:
AT BE CH DE ES FR IT LI LU NL SE

(71) Applicant: STC PLC
10, Maltravers Street
London, WC2R 3HA(GB)

(72) Inventor: Bone, Matthew Francis
2, Parklane Bishop's Stortford
Hertfordshire(GB)

(74) Representative: Laurence, Simon French et al
STC Patents West Road
Harlow Essex CM20 2SH(GB)

(54) Analogue modulation of light.

(57) An analogue optical response is provided in a planar aligned inclined smectic phase liquid crystal cell by the application of an amplitude modulated oscillatory potential across the thickness of the liquid crystal layer.

Fig.2.

## ANALOGUE MODULATION OF LIGHT

This invention relates to the analogue modulation of light by transmitting the light through a liquid crystal layer and modulating the optical properties of that layer. A change in transmitted intensity may be provided by arranging for the light incident upon the liquid crystal layer to be polarised, and then arranging for the emergent light to pass through an appropriately oriented polarisation analyser. The resulting greyscale response may be used for instance electro-optic modulators. The modulation of the optical properties of the liquid crystal layer produces a modulation of its birefringence which can alternatively be used in applications requiring a change in optical path length such as a tunable Fabry Perot type structure.

In an ideal Surface Stabilised Ferroelectric Liquid Crystal (SSFLC) device, as originally described by N.A. Clark and S.T. Lagerwall in Applied Physics Letters Volume 36 (1980) pp 899 - 901, the liquid crystal director is visualised as being switched between only two possible equilibrium tilted states, in one of which the ferroelectric dipole is directed UP, and in the other of which the ferroelectric dipole is directed DOWN. Switching between these two states is conceived as a discontinuous process which is mediated by the nucleation and propagation of domain walls. Under these conditions a greyscale for a given area requires that area be subdivided to form a multidomain pattern in which the greyscale is rendered by the ratio of the number of domains in the given area that are UP to those that are DOWN. Achieving a greyscale by this kind of process tends to be inconveniently complex.

A study of the properties of ferroelectric liquid crystal cells has revealed an analogue response which permits the achieving of greyscale levels without recourse to the multidomain subdivision technique referred to in the preceding paragraph.

According to the present invention there is provided a method of impressing modulation upon a beam of light, wherein the light is directed through a planar aligned inclined smectic phase liquid crystal layer confined between two surfaces, characterised in that amplitude modulation of the beam of light is impressed by the maintenance of an amplitude modulated oscillatory potential across said liquid crystal layer.

There follows a description of a liquid crystal cell and its operation to provide analogue modulation of light in a manner embodying the invention in a preferred form. The description refers to the accompanying drawings in which:

Figure 1 depicts a schematic perspective view of the liquid crystal cell.

Figure 2 is a diagram illustrating how it is believed that the liquid crystal director alignment varies within the thickness of the liquid crystal layer of the cell of Figure 1, and

Figures 3 and 4 are graphs depicting the modulation of light with the cell of Figure 1.

A hermetically sealed envelope for a liquid crystal layer is formed by securing together two glass sheets 11 and 12 with a perimeter seal 13. The inward facing surfaces of the two sheets carry transparent electrode layers 14 and 15 of indium tin oxide, and each of these electrode layers is covered within the display area defined by the perimeter seal with a thin polymer layer, such as polyamide, provided for molecular alignment purposes. Both polyamide layers are rubbed in a single direction so that when a liquid crystal is brought into contact with them they will tend to promote planar alignment of the liquid crystal molecules in the direction of the rubbing. The cell is assembled with the rubbing directions aligned parallel with each other. The thickness of the liquid crystal layer contained within the resulting envelope is determined by the thickness of the perimeter seal, and control over the precision of this may be provided by a light scattering of polymer spheres (not shown) of uniform diameter distributed over the area enclosed by the perimeter seal and through the material of the perimeter seal. Conveniently the cell is filled by applying a vacuum to an aperture (not shown) through one of the glass sheets in one corner of the area enclosed by the perimeter seal so as to cause the liquid crystal medium to enter the cell by way of another aperture (not shown) located in the diagonally opposite corner. (Subsequent to the filling operation the two apertures are sealed). The filling operation is carried out with the filling material heated into its isotropic phase so as to reduce its viscosity to a suitably low value. It will be noted that the basic construction of the cell is similar to that of for instance a conventional twisted nematic, except of course for the parallel alignment of the rubbing directions, and for the fact that a smaller layer thickness is typically chosen for the liquid crystal layer. For one example the liquid crystal filling of a $2\mu m$ thickness cell was the smectic chiral ester marked by BDH under the designation SCE6.

After it had been filled, the cell was slowly cooled into the smectic C* phase via the nematic and smectic A phases. The rubbed polyamide surfaces promote planar alignment of the molecules of the liquid crystal layer as it enters the nematic, and this alignment is preserved as the layer subsequently enters the smectic A phase. At this stage it appears that the smectic layers are formed in planes extending normally to the rubbing direction, and hence perpendicular to the planes of the major surfaces of the liquid crystal layer. This alignment of the smectic layers appears to be maintained as the liquid cools into the smectic C* phase even though the orientations of the molecules within those smectic layers are changed upon entering the C* phase.

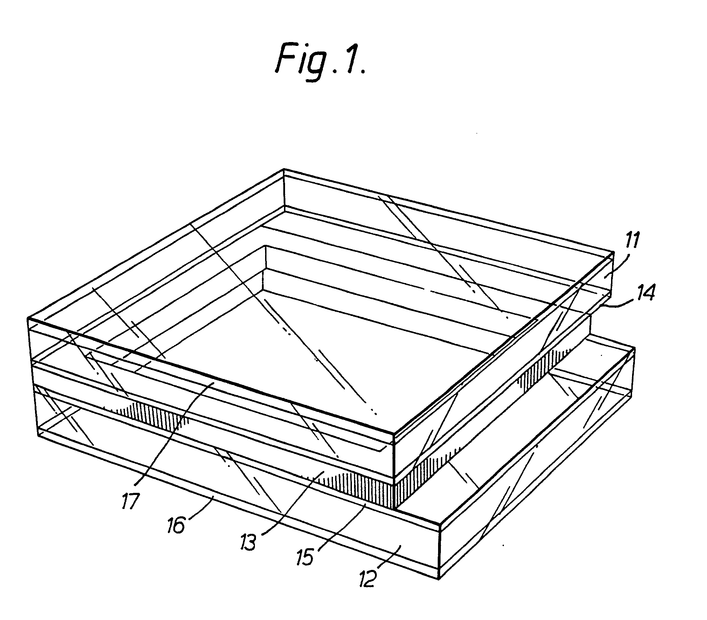

The cell of Figure 1 is located between a pair of linear polarisation sheets 16 and 17 in crossed relationship so as to function respectively as polariser and analyser. If the polariser is oriented so that its plane of polarisation is inclined at $\theta_t$ to the rubbing direction, where $\theta_t$ is the tilt angle of the smectic C* phase material used to fill the cell, and if the liquid crystal layer is in a state in which its molecular directors are all aligned so that their ferroelectric dipoles are directed in a particular direction normal to the plane of the layer arbitrarily designed the UP direction, then the polarisation plane of the polariser 16 is aligned with the optic axis of the liquid crystal. Under these circumstances the state of polarisation (SOP) of the light is unchanged in its propagation through the thickness of the liquid crystal layer, and hence its onward transmission is blocked by the analyser 17. By way of contrast, if the liquid crystal layer is in a state in which its molecular directors are all aligned so that their ferroelectric dipoles are oriented in the DOWN direction, then the polariser is no longer aligned with the optic axis since the latter has been rotated through $2\theta_t$. In consequence the SOP evolves as the light propagates through the thickness of the liquid crystal layer, and conditions can be arranged so that the amount by which it evolves allows a significant proportion of the light to pass through the analyser 17.

The UP and DOWN states of the preceding paragraph are the two bistable states postulated in the Clark and Lagerwall paper referred to above. With the cell of Figure 1 it can be shown that the application of an electric field in a direction favouring the UP state can be made sufficient to produce a condition in which the apparent optic axis is indeed inclined to the rubbing direction at an angle of approximately $+\theta_t$, but that upon removal of this field the state relaxes into a condition in which the optic axis is inclined at a significantly smaller angle to the rubbing direction. Similarly if the application of the field is in the direction to favour the DOWN state then the optic axis relaxes, upon removal of the field, from a value close to $-\theta_t$ to a similarly significantly smaller value.

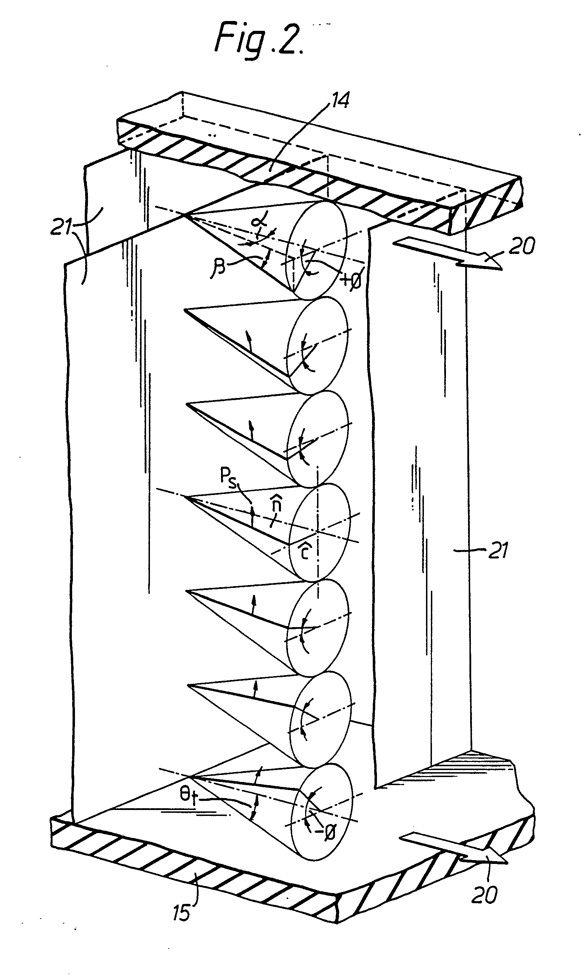

Observation of these effects, and of the response to an amplitude modulated 30KHz carrier field applied across the cell, suggests the validity of a model of alignment as depicted in Figure 2 which characterises the relaxed state that results after removal of an applied field favouring the UP state.

In Figure 2 the rubbed polymer coated electrode layers 14 and 15 are depicted assembled with the rubbing direction lying in the direction of arrows 20. The planes of the smectic layers are depicted by planes 21, and the directions of the molecular directors of the molecules at different depths within the liquid crystal layer are represented by the vectors $\hat{n}$. To a first approximation, the vector $\hat{n}$ is everywhere inclined at an angle $\theta_t$, the true tilt angle, to the smectic layer normal, which is also the rubbing direction, and hence $\hat{n}$ lies on the surface of a cone. The position of $\hat{n}$ on the cone is conveniently defined by the azimuth angle $\phi$ between the plane of the liquid crystal layer and the vector $\hat{c}$, known as the $\hat{c}$ director, which lies in the plane of the smectic layers and points to the tip of the molecular director $\hat{n}$. The ferroelectric dipole moment is represented by the vector $\hat{P}_s$ which is perpendicular to the vector $\hat{n}$ and tangent to the cone. In respect of any given azimuth angle $\phi$ there is an apparent tilt angle $\alpha$, which is the angle between the smectic layer normal and the projection of the vector $\hat{n}$ upon the plane of the liquid crystal layer, and there is also an out-of-plane tilt angle $\beta$, which is the angle between the smectic layer normal and the projection of the vector $\hat{n}$ upon the plane that is orthogonal to both the smectic layer plane and the plane of the liquid crystal layer.

In the relaxed state that results after removal of an applied field favouring the UP state it is believed that at the mid-plane of the liquid crystal layer the vector $\hat{n}$ lies in the plane of the liquid crystal layer and hence the ferroelectric dipole moment represented by the vector $\hat{P}_s$ points UP at this position. At this mid-plane position the azimuth angle $\phi$ is zero, there is no out-of-plane tilt, and the apparent tilt angle $\alpha$ is equal to the true tilt angle $\theta_t$. It is also believed that with increasing distance from the mid-plane the azimuth angle $\phi$ is steadily changed to a value of $+\phi$ at one boundary surface of the liquid crystal layer and to a value of $-\phi$ at the other.

This model of Figure 2 provides an explanation for the observation that the two fully switched states induced by the application of appropriately directed fields relax upon removal of their respective fields into two relaxed states which have apparent optic axes which are symmetrically displaced about the smectic layer normal by an angle $\alpha$ significantly smaller than the true tilt angle $\theta_t$, and from the further observation, from both dielectric and optical measurements, that the director configuration within the two relaxed states includes a significant out-of-plane tilt.

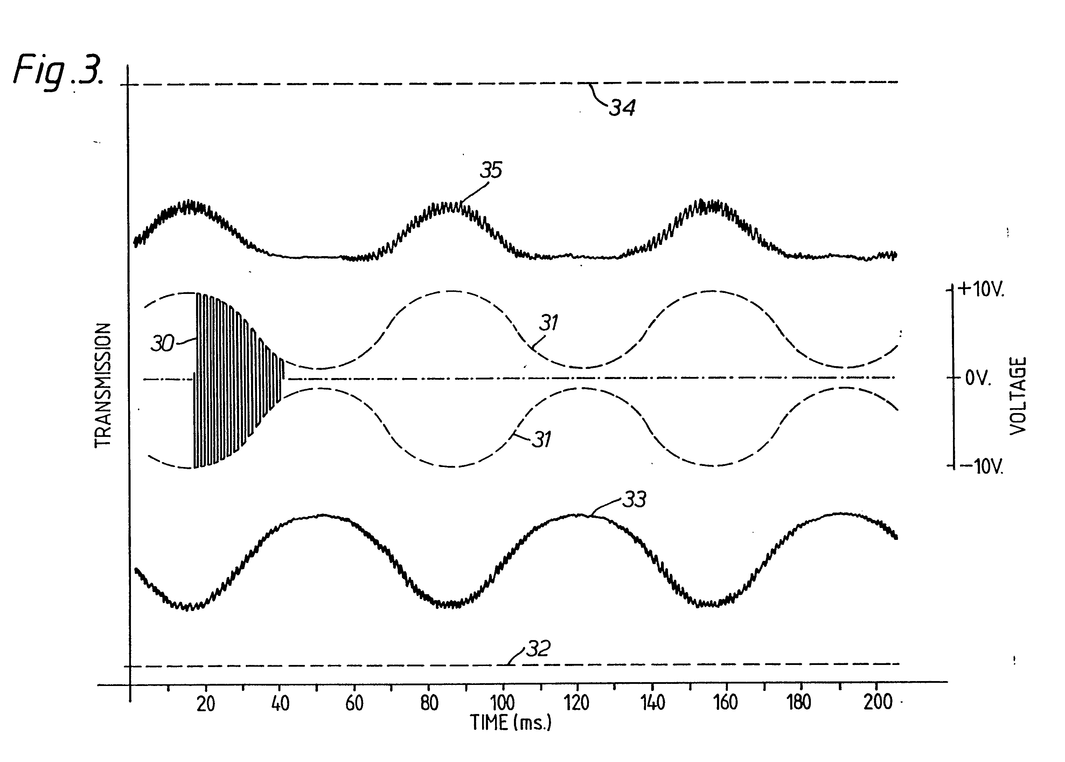

The director configuration of Figure 2 suggests that the optical properties of the device may be modified via the interaction of the ferroelectric dipole with an applied field or via the interaction of the induced dipole with that field. This modification will result in a change of the out-of-plane tilt of the director, and consequently change in the birefringence of the device. Interaction via the induced dipole conveniently involves the application of an alternating field so as to avoid problems of electrochemical degradation effects that are liable to occur with sustained unipolar applied fields. Now, whereas the effect of an interaction with the induced dipole remains unchanged with a reversal of the polarity of the applied field, the same is not true in respect of an interaction with the ferroelectric dipole. In consequence it is generally desirable to choose a frequency at which the interaction with the induced dipole is significantly stronger than that with the ferroelectric dipole. In the case of the particular smectic SCE6 referred to previously, a suitable frequency for the applied field lies at around 30kHz. The effect of the application of such a field upon the cell of Figure 1 maintained at a temperature of 25°C is depicted in Figure 3 which shows the 30kHz field amplitude modulated at a frequency of about 14Hz. In this figure the applied field is depicted by trace 30, and its envelope by the broken lines 31. Broken line 32 depicts the light transmission when a steady field is applied promoting the UP state. On removal of this steady field the transmission increases as the cell relaxes. Upon application of the 30kHz signal the transmission follows the path of trace 33, being driven, by virtue of the negative dielectric anisotropy exhibited by SCE6, further towards the fully switched state as the field amplitude increases and reverting towards the fully relaxed state as the field amplitude is diminished. Broken line 34 depicts the light transmission when a steady field is applied promoting the DOWN state, and after replacement of the steady field with the alternating field signal of trace 30 the transmission follows trace 35.

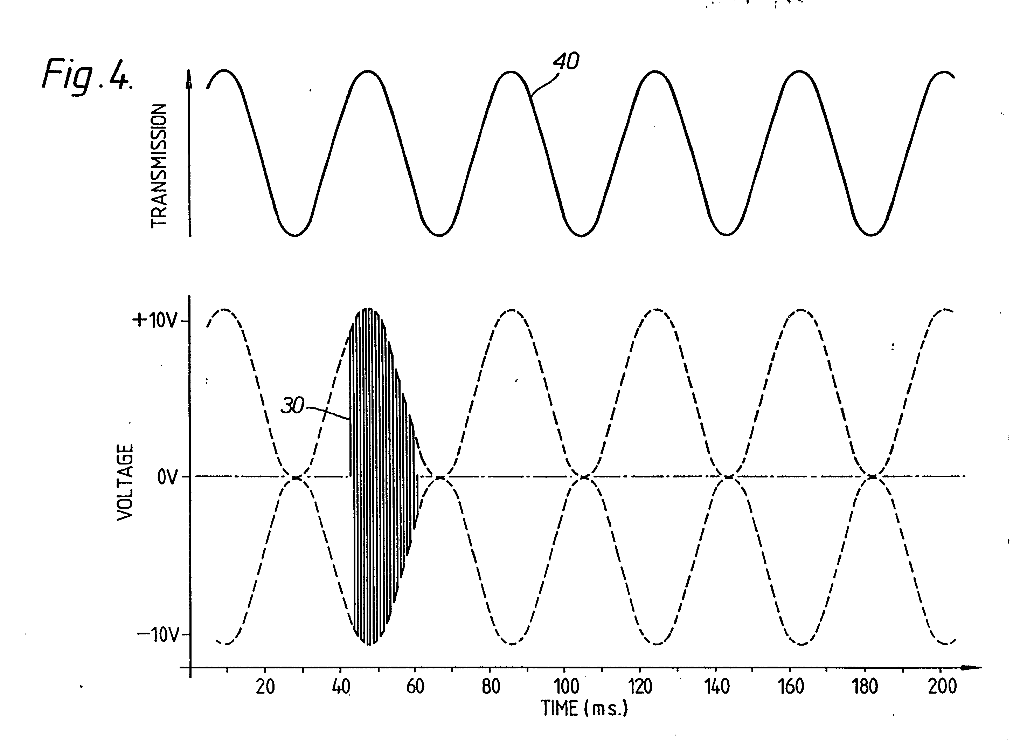

Replacing the chiral smectic filling of the cell of Figure 1 with a racemic mixture ensures that there can be no interaction with the ferroelectric dipole on a macroscopic scale, and Figure 4 shows at 40 the trace corresponding to trace 35 of Figure 3 produced by the application of the same amplitude modulated field 30 to the cell having previously been set into its DOWN state.

## Claims

1. A method of impressing modulation upon a beam of light wherein the light is directed through a planar aligned inclined smectic phase liquid crystal layer confined between two surfaces, characterised in that amplitude modulation of the beam of light is impressed by the maintenance of an amplitude modulated oscillatory potential across said liquid crystal layer.

2. A method as claimed in claim 1, wherein the liquid crystal layer is in the smectic C phase.,

3. A method as claimed in claim 1 or 2 wherein the liquid crystal layer is ferroelectric.

4. A method as claimed in claim 1 or 2 wherein the liquid crystal layer is a racemic mixture.

5. A method as claimed in claim 3 wherein the frequency of the oscillatory potential is sufficiently high in relation to the frequency of its amplitude modulation to make the response of the liquid crystal layer to the applied potential resulting from interaction with the ferroelectric dipole of the liquid crystal insignificant compared with the response resulting from interaction with the induced dipole of the liquid crystal.

6. A method as claimed in any preceding claim wherein the two surfaces between which the liquid crystal layer is confined are rubbed polymer surfaces.

# Fig.1.

# Fig.2.

Fig.3.

Fig.4.

TRANSMISSION

40

VOLTAGE

+10V

0V

−10V

30

20  40  60  80  100  120  140  160  180  200

TIME (ms.)

EP 0 338 675 A1

MEBONE-8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | JOURNAL OF APPLIED PHYSICS, vol. 61, no. 6, 15th March 1987, pages 2400-2403, American Institute of Physics, New York, NY, US; K.H. YANG: "Electro-optical effects of uniform layer-tilted state in ferroelectric liquid crystals" * Whole article * | 1-6 | G 09 G    3/36 G 02 F    1/137 H 04 N    3/12 |
| A | CONFERENCE RECORD OF THE 1985 INTERNATIONAL DISPLAY RESEARCH CONFERENCE, San Diego, California, 15th - 17th October 1985, pages 213-221, IEEE, New York, US; S.T. LAGERWALL et al.: "Ferroelectric liquid crystals for displays" * Page 218, chapter: "Grey scale and colour" * | 1 | |
| A | 1987 SID INTERNATIONAL SYMPOSIUM, New Orleans, Louisiana, 12th - 14th May 1987, pages 352-354, SID, New York, US; T. UMEDA et al.: "A muliplexed ferroelectric liquid-crystal light shutter array using an AC field-stabilization method" * Page 352, chapter "Introduction", "AC field-stabilization effect" * | 1-3 | TECHNICAL FIELDS SEARCHED (Int. Cl.4)  G 09 G    3/00 G 02 F    1/00 H 04 N    3/00 |
| A | APPLIED PHYSICS LETTERS, vol. 51, no. 9, 31st August 1987, pages 640-642, American Institute of Physics, New York, US; G. ANDERSSON et al.: "Submicrosecond electro-optic switching in the liquid-crystal smectic A phase: The soft-mode ferroelectric effect" * Page 641, left-hand column * | 1 | |

-/-

The present search report has been drawn up for all claims

| Place of search | Date of completion of the search | Examiner |
|---|---|---|
| THE HAGUE | 10-07-1989 | DIOT P.M.L. |

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| A | DE-A-3 630 012  (CANON)<br>* Page 5, lines 18-28 * | 1-3,6 | |

TECHNICAL FIELDS
SEARCHED (Int. Cl.4)

The present search report has been drawn up for all claims

| Place of search | Date of completion of the search | Examiner |
|---|---|---|
| THE HAGUE | 10-07-1989 | DIOT P.M.L. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................................
& : member of the same patent family, corresponding
    document

EPO FORM 1503 03.82 (P0401)